# EUROPÄISCHE PATENTANMELDUNG

(11) **EP 4 455 991 A1**
(43) Veröffentlichungstag der Anmeldung: **30.10.2024**
(21) Anmeldenummer: 23170723.3
(22) Anmeldetag: 28.04.2023
(51) Int. Cl.: G06T 7/00

(54) **ÜBERWACHUNG DES ZUSTANDS EINES WERKZEUGS**

(71) Anmelder: Siemens Aktiengesellschaft, 80333 München (DE)
(72) Erfinder: Janisch, Lucas, 80803 München (DE); Pantano, Matteo, 81373 München (DE)
(74) Vertreter: Siemens Patent Attorneys

(57) **Zusammenfassung**

Es wird ein Verfahren zur Überwachung des Zustands eines Werkzeugs (10) angegeben, umfassend die folgenden Schritte:
f) Bereitstellen eines Referenzdatensatzes (DS1) durch
a1) Erzeugung eines ersten Bilddatensatzes (IM1),
a2) automatisierte Segmentierung des ersten Bilddatensatzes (IM1) in eine Anzahl von Referenz-Superpixeln, (SP1)
a3) Zuordnung der Referenz-Superpixel (SP1) zu wenigstens zwei semantischen Klassen, welche eine Werkzeugklasse (ClT) und eine Hintergrundklasse (ClB) umfassen, so dass ein Werkzeugbereich (T) und ein Hintergrundbereich (B) des Referenzdatensatzes (DS1) definiert werden;

g) Bereitstellen eines Arbeitsdatensatzes (DS2) durch
b1) Erzeugung eines zweiten Bilddatensatzes (IM2),
b2) automatisierte Segmentierung des zweiten Bilddatensatzes (IM2) in eine Anzahl von Arbeits-Superpixeln (SP2)
b3) Zuordnung der Arbeits-Superpixel (SP2) zu den wenigstens zwei semantischen Klassen, so dass ein Werkzeugbereich (T) und ein Hintergrundbereich (B) des Arbeitsdatensatzes (DS2) definiert werden;

h) automatisierte Klassifikation von Flächendefekten durch
c1) Bewertung der Ähnlichkeit der Arbeits-Superpixel (SP2) im Werkzeugbereich (T) des Arbeitsdatensatzes (DS2) mit den Referenz-Superpixeln (SP1) im Werkzeugbereich (T) des Referenzdatensatzes (DS1) und
c2) Zuordnung der Arbeits-Superpixel (SP2), deren Ähnlichkeitswerte unter einem vorgegebenen Schwellwert liegen, zu einer Flächendefektklasse (ClS).

Weiterhin werden ein Analysesystem (20) sowie ein Computerprogrammprodukt angegeben.

## Beschreibung

Die vorliegende Erfindung betrifft ein Verfahren zur Überwachung eines Zustands eines Werkzeugs, wobei ein Arbeitsdatensatz bereitgestellt wird und eine automatisierte Klassifikation von Flächendefekten im Arbeitsdatensatz erfolgt. Weiterhin betrifft die Erfindung ein Analysesystem zur Überwachung des Zustands eines Werkzeugs sowie ein entsprechendes Computerprogrammprodukt.

Werkzeugverschleiß trägt in der industriellen Fertigung wesentlich zu den Produktionskosten bei. Der Werkzeugverschleiß hängt neben der vergangenen Einsatzzeit des Werkzeugs auch von dem bearbeiteten Material und den Bearbeitungsparametern ab und steigt kontinuierlich an, allerdings in der Regel nicht linear. Erreicht der Werkzeugverschleiß einen vorher festgelegten zulässigen Maximalverschleiß, so ist das Werkzeug verschlissen. Wird ein verschlissenes Werkzeug weiter verwendet, so sinken Bauteilqualität und Bearbeitungsleistung signifikant. Um dies zu vermeiden, werden Werkzeuge oft früher ausgewechselt, als dies in Hinblick auf den Maximalverschleiß notwendig wäre. Dadurch steigen die Werkzeugkosten aufgrund der nicht genutzten Einsatzzeit des Werkzeugs.

Bei modernen industriellen Werkzeugmaschinen wird daher häufig eine regelmäßige Zustandsüberwachung durchgeführt, um den Werkzeugverschleiß zu charakterisieren. So können nachteilige Folgen von zu spätem oder zu frühem Werkzeugwechsel vermieden werden. Hierbei sind sowohl indirekte als auch direkte Verfahren zur Zustandsüberwachung gebräuchlich. Bei den indirekten Verfahren werden Maschinensignale wie beispielsweise Vibrationen, akustische Emissionen, Schnittkräfte, Maschinenströme und dergleichen ausgewertet. Aufgrund der indirekten Natur dieser Verfahren ist eine Bestimmung des Verschleißzustands jedoch nicht mit hoher Genauigkeit möglich. Zudem sind die eingesetzten Verfahren häufig in der Anwendung auf bestimmte Werkzeugarten oder Werkzeuggeometrien limitiert.

Bei den direkten Ansätzen werden Werkzeuge mit Hilfe eines Laserstrahls vermessen oder mit einer Kamera abgebildet, um anschließend entweder manuell oder mit automatisierten Verfahren der Bilderkennung eventuell entstandene Defekte des Werkzeugs zuzuordnen. Die hierzu verwendete Kamera kann beispielsweise in die Werkzeugmaschine integriert sein, um regelmäßige Kontrollen des Werkzeugs innerhalb einer industriellen Fertigungsanlage zu ermöglichen. Die manuelle Zuordnung von Defekten in solchen Bildern ist äußerst zeitaufwendig, so dass sie meist für eine regelmäßige Zustandsüberwachung im industriellen Umfeld nicht in Frage kommt. Daher setzen sich zur Zeit mehr und mehr die automatisierten Verfahren der Bilderkennung bzw. das maschinelle Sehen für solche Anwendungszwecke durch (englische Fachbegriffe hierfür sind Computer Vision und Machine Vision).

Mit Computer Vision (CV) können typische Aufgaben des menschlichen Sehens automatisiert durch Computer ausgeführt werden. Hierzu gehören die Bildaufnahme, die Verarbeitung der Bilder, Bildsegmentierung, die Zuordnung von Bildsegmenten, Merkmalsextraktion, Mustererkennung und Objekterkennung. So können mit solchen CV-Verfahren insbesondere Bereiche von Werkzeug-Bildern automatisiert verschiedenen semantischen Klassen zugeordnet werden wie beispielsweise einer (unbeschädigten) Werkzeugklasse, einer Hintergrundklasse und verschiedenen vordefinierten Defektklassen. Solche Defektklassen können den verschiedenen Defekttypen entsprechen, die bei einer bestimmten Werkzeugart typischerweise auftreten. So können die Defektklassen beispielsweise eine Klasse für Flächendefekte (Defekte in der Oberflächenstruktur eines Werkzeugs), eine Klasse für Materialaufbau-Defekte (z.B. sogenannte "Build-Up Edges", bei denen eine Materialablagerung im Kantenbereich eines Werkzeugs stattgefunden hat) und/oder eine Klasse für Materialabtragungs-Defekte umfassen (z.B. Materialabtragung im Randbereich durch Abrasion, Abplatzen, Einrisse, Rillen).

Die automatisierte Defekt-Detektion an industriellen Werkzeugen kann prinzipiell sowohl mit klassischen Computer-Vision-Verfahren (wie z.B. automatisierter Kantendetektion) als auch mit Methoden der künstlichen Intelligenz bzw. des maschinellen Lernens erfolgen. Die Begriffe künstliche Intelligenz (KI), maschinelles Lernen (ML) und Deep Learning (DL, englisch für "tiefgehendes Lernen") sollen zunächst voneinander abgegrenzt werden. So bezeichnet künstliche Intelligenz einen Bereich der Informatik, bei dem Systeme zur Bewältigung von Aufgaben entwickelt werden, die früher Menschen oder anderen intelligenten Lebewesen vorbehalten waren. Dazu gehören die Fähigkeiten, Sinneseindrücke wahrzunehmen und darauf zu reagieren, Informationen aufzunehmen, zu verarbeiten und als Wissen zu speichern, Sprache zu verstehen und zu erzeugen, Probleme zu lösen und Ziele zu erreichen. Um künstliche Intelligenz zu ermöglichen, werden häufig Methoden des maschinellen Lernens angewendet. Hierzu gehören die Methoden, bei denen Systeme mit Daten dazu trainiert werden, bestimmte Aufgaben zu erfüllen, ohne explizit dazu programmiert zu werden. Deep Learning ist eine Unterkategorie des maschinellen Lernens: Hierbei werden künstliche neuronale Netzwerke dazu verwendet, um aus Daten zu lernen, ähnlich wie dies beim Lernvorgang in einem menschlichen Gehirn geschieht.

Mit KI-basierten Computer-Vision-Verfahren kann bei der automatisierten Erkennung von Werkzeugdefekten eine hohe Flexibilität und eine hohe Zuverlässigkeit erreicht werden. So können beispielsweise auch in Bildern mit unterschiedlicher Ausleuchtung und unterschiedlichen Bildhintergründen Defekte oft zuverlässig erkannt werden. Eine Voraussetzung hierfür ist aber meist, dass das verwendete künstliche neuronale Netzwerk zuvor mit spezifischen Trainingsdatensätzen trainiert wurde. Solche Trainingsdatensätze sind häufig sehr umfangreich, und es ist erforderlich, in den einzelnen Trainingsdaten die vorliegenden Defekte durch eine Bedienperson den relevanten Defektklassen zuzuordnen, damit das neuronale Netzwerk die Durchführung der korrekten Zuordnung erlernen kann. Die manuelle Zuordnung der Defekte in den Trainingsdaten ist meist sehr aufwendig, denn es werden typischerweise mehrere Hundert klassifizierte Bilddatensätze benötigt, um ein neuronales Netzwerk auf die Erkennung von Defekten in einem bestimmten Werkzeugtyp zu trainieren. Die manuelle Zuordnung der Werkzeug-Defekte in einem einzelnen Bilddatensatz benötigt beispielsweise zwischen 10 und 20 Minuten, so dass allein für die Erzeugung der benötigten Trainingsdaten mehrere Tage an menschlicher Arbeitszeit aufzuwenden sind. Dazu kommt noch der Rechenaufwand, um mit den Trainingsdatensätzen das neuronale Netzwerk auf die relevanten Defektklassen des jeweiligen Werkzeugtyps zu trainieren.

Ein wesentlicher Nachteil dieser herkömmlichen KI-basierten Defekterkennungsmethoden ist, dass das zugrundeliegende neuronale Netzwerk für jeden unterschiedlichen Werkzeugtyp neu trainiert werden muss, wozu jeweils spezifische manuell zugeordnete Trainingsdatensätze benötigt werden. Insgesamt ist damit der Aufwand sehr hoch, der bei einem Wechsel des Werkzeugtyps entsteht, um das Defekterkennungssystem auf den neuen Werkzeugtyp anzupassen.

Vor diesem Hintergrund ist es eine Aufgabe der vorliegenden Erfindung, ein verbessertes Verfahren zur Überwachung des Zustands eines Werkzeugs anzugeben, das flexibel auf verschiedene Werkzeugtypen anwendbar ist. Insbesondere soll dabei eine weitgehend automatisierte Defekterkennung mit hoher Zuverlässigkeit ermöglicht werden. Eine weitere Aufgabe ist es, ein Analysesystem sowie ein Computerprogrammprodukt zur Durchführung dieses Verfahrens zur Verfügung zu stellen.

Diese Aufgaben werden durch das in Anspruch 1 beschriebene Verfahren, das in Anspruch 14 beschriebene Analysesystem und das in Anspruch 15 beschriebene Computerprogrammprodukt gelöst.

Das erfindungsgemäße Verfahren dient zur Überwachung des Zustands eines Werkzeugs und umfasst die folgenden Schritte:
a) Bereitstellen eines Referenzdatensatzes durch
   a1) Erzeugung eines ersten Bilddatensatzes mit einer Vielzahl von Bildpunkten für das Werkzeug in einem Referenzzustand,
   a2) automatisierte Segmentierung des ersten Bilddatensatzes in eine Anzahl von Referenz-Superpixeln,
   a3) Zuordnung der Referenz-Superpixel zu wenigstens zwei semantischen Klassen, welche eine Werkzeugklasse und eine Hintergrundklasse umfassen, so dass ein Werkzeugbereich und ein Hintergrundbereich des Referenzdatensatzes definiert werden;
b) Bereitstellen eines Arbeitsdatensatzes durch
   b1) Erzeugung eines zweiten Bilddatensatzes mit einer Vielzahl von Bildpunkten für das Werkzeug in einem Arbeitszustand,
   b2) automatisierte Segmentierung des zweiten Bilddatensatzes in eine Anzahl von Arbeits-Superpixeln,
   b3) Zuordnung der Arbeits-Superpixel zu den wenigstens zwei semantischen Klassen, so dass ein Werkzeugbereich und ein Hintergrundbereich des Arbeitsdatensatzes definiert werden, sowie
c) automatisierte Klassifikation von Flächendefekten durch
   c1) Bewertung der Ähnlichkeit der Arbeits-Superpixel im Werkzeugbereich des Arbeitsdatensatzes mit den Referenz-Superpixeln im Werkzeugbereich des Referenzdatensatzes und
   c2) Zuordnung der Arbeits-Superpixel, deren Ähnlichkeitswerte unter einem vorgegebenen Schwellwert liegen, zu einer Flächendefektklasse.

Der zu überwachende Zustand des Werkzeugs kann insbesondere ein Verschleißzustand des Werkzeugs sein, so dass mit dem Verfahren Defekte des Werkzeugs, die bei der Benutzung entstehen, identifiziert werden können. So kann in den genannten Bilddatensätzen insbesondere jeweils ein verschleißrelevanter Bereich des Werkzeugs abgebildet sein, beispielsweise eine Schneidkante eines Schneidwerkzeugs. Bei dem Referenzzustand kann es sich insbesondere um einen unverschlissenen Zustand handeln, also beispielsweise entweder um einen Neuzustand des Werkzeugs vor seinem ersten Einsatz oder um einen Zustand nach einer gründlichen manuellen Überprüfung, bei der keine Defekte festgestellt wurden, z.B. vor dem Einbau in eine Werkzeugmaschine. Dementsprechend kann es sich bei dem Arbeitszustand insbesondere um einen Zustand nach Benutzung des Werkzeugs handeln, also um einen Zustand, bei dem ein potentieller Verschleiß durch die Benutzung festgestellt werden soll. Für jeden dieser beiden Zustände wird in Schritt a1) bzw. in Schritt b1) ein Bilddatensatz mit einer Vielzahl von Bildpunkten (sogenannten Pixeln) erzeugt. Diese Bilderzeugung kann automatisiert erfolgen, beispielsweise mit einer Kameravorrichtung, insbesondere einer Mikroskopkameravorrichtung. Diese Kameravorrichtung kann beispielsweise in eine Werkzeugmaschine, in der das Werkzeug zum Einsatz kommt, integriert sein, um in regelmäßigen und/oder unregelmäßigen Abständen während des Betriebs des Werkzeugs eine Zustandsüberwachung vorzunehmen.

Bei dem jeweiligen Bilddatensatz kann es sich insbesondere um ein digitales Bild eines Bildsensors, beispielsweise eines CMOS-Sensors handeln. Der Bilddatensatz kann eine zweidimensionale Anordnung von Bildpunkten aufweisen, wobei diese Anordnung insbesondere in Spalten und Zeilen vorliegt. In den Schritten a2) bzw. b2) werden die Bildpunkte des jeweiligen Bilddatensatzes automatisiert in eine Anzahl von Superpixeln segmentiert. Dies kann insbesondere eine vordefinierte Anzahl von Superpixeln sein, welche vorteilhaft für die Schritte a2) und b2) untereinander gleich gewählt sein kann. Die Anzahl von Superpixeln für jeden Bilddatensatz kann beispielsweise im Bereich zwischen 50 und 5000 liegen, wobei sich die Auswahl dieser Anzahl zweckmäßig an der Zahl der vorliegenden Bildpunkte und an der räumlichen Auflösung des aufgenommenen Bildes orientieren kann. Die Segmentierung in Superpixel wird manchmal auch als Übersegmentierung (englisch Oversegmentation) bezeichnet. Darunter wird eine Gruppierung bzw. Clusterung der einzelnen Pixel in nützliche Teilregionen verstanden. Die einzelnen Superpixel können dann anstelle der Einzelpixel in nachfolgenden Bildverarbeitungsschritten verwendet werden, z.B. für die semantische Zuordnung zu vorbestimmten Klassen. Vorteilhaft können die einzelnen Superpixel jeweils in sich räumlich zusammenhängend sein, sich also nicht gegenseitig durchdringen (räumliche Konnektivität).

Die Segmentierung in Superpixel kann mit einem der zahlreichen aus dem Stand der Technik bekannten Verfahren automatisiert erfolgen, z.B. mit dem sogenannten SLIC-Algorithmus (SLIC für Simple Linear Iterative Clustering) oder darauf basierenden Algorithmen. Allgemein kann die Segmentierung in Superpixel auf einem ML-basierten Verfahren, insbesondere unter Verwendung eines künstlichen neuronalen Netzwerks erfolgen. Als Ergebnis der Segmentierung wird für jeden Bildpunkt eine Zuordnung zu einem der Superpixel erhalten und für jeden Superpixel werden ein oder mehrere zugeordnete Intensitätswerte erhalten (z.B. durch Mittelung der Intensitätswerte der einzelnen Bildpunkte oder durch eine anderweitige Rechenoperation). Als Intensitätswerte können zum Beispiel pro Bildpunkt und entsprechend pro Superpixel drei Intensitätswerte im RGB-Farbraum oder vier Intensitätswerte im CMYK-Farbraum oder eine entsprechende Anzahl von Intensitätswerten in einem anderen gängigen Farbraum zur Verfügung gestellt werden.

In den Teilschritten a3) bzw. b3) werden die jeweiligen Superpixel in Werkzeug-Superpixel und Hintergrund-Superpixel unterteilt. Diese Zuordnung kann grundsätzlich automatisiert oder semi-automatisiert (z.B. mit Hilfe von einem k-Means-Clustering-Algorithmus) oder auch manuell durch einen Benutzer erfolgen. Grundsätzlich ist es auch möglich, bereits vor der Segmentierung im Schritt a2) bzw. b2) eine Unterteilung der Bildpunkte in einen Werkzeugbereich und einen Hintergrundbereich vorzunehmen. Dann kann gegebenenfalls auch nur der Werkzeugbereich oder ein den Werkzeugbereich unmittelbar umgebender Teilbereich des Bildes auf die beschriebene Weise in Superpixel segmentiert werden. Optional können auch hier schon weitere Klassen zusätzlich zu der Werkzeugklasse und der Hintergrundklasse zum Einsatz kommen. Wesentlich für die Erfindung ist hier aber nur die Unterteilung in Werkzeugbereich und Hintergrundbereich, durch deren Grenze insbesondere jeweils eine Werkzeug-Umrisslinie definiert wird. So wird für den Referenzdatensatz eine Referenz-Umrisslinie des Werkzeugs festgelegt und für den Arbeitsdatensatz wird eine Arbeits-Umrisslinie des Werkzeugs festgelegt. Bei vergleichsweise einfachen Werkzeuggeometrien sind der Werkzeugbereich und der Hintergrundbereich jeweils räumlich zusammenhängend, sodass die jeweilige Umrisslinie eine einfache Linie ist, welche der Werkzeugkante entsprechen kann. Bei komplexeren Werkzeuggeometrien kann die jeweilige Umrisslinie jedoch auch aus mehreren separaten Teilen bestehen, z.B. wenn das Werkzeug lochartige Aussparungen aufweist, bei denen der Bilddatensatz wiederum entsprechende Hintergrundbereiche enthält.

Nach Durchlaufen der Schritte a1) bis a3) wird also insgesamt ein Referenzdatensatz bereitgestellt, welcher neben dem ersten Bilddatensatz (mit Intensitätswerten pro Bildpunkt) auch die Zuordnung der einzelnen Bildpunkte zu den Referenz-Superpixeln, die Klassenzuordnung der einzelnen Referenz-Superpixel und zweckmäßig auch Intensitätswerte der jeweiligen Referenz-Superpixel enthält. In analoger Weise enthält der nach den Schritten b1) bis b3) bereitgestellte Arbeitsdatensatz neben dem zweiten Bilddatensatz auch die dortige Zuordnung der einzelnen Bildpunkte zu den Arbeits-Superpixeln, die Klassenzuordnung der einzelnen Arbeits-Superpixel und zweckmäßig auch die Intensitätswerte der jeweiligen Arbeits-Superpixel.

Wesentlich für die vorliegende Erfindung ist, dass in Schritt c) eine automatisierte Klassifizierung von Flächendefekten aufgrund einer Ähnlichkeitsbewertung zwischen den Superpixeln in den Werkzeugbereichen des Referenzdatensatzes und des Arbeitsdatensatzes erfolgt. Dabei werden diejenigen Arbeits-Superpixel des Werkzeugbereichs, die in dieser Ähnlichkeitsbewertung als vergleichsweise unähnlich eingestuft werden, als Flächendefekte klassifiziert. Es muss natürlich nicht zwangsläufig eine solche Zuordnung erfolgen: Falls für keines der Arbeits-Superpixel im Werkzeugbereich der Ähnlichkeits-Schwellwert unterschritten wird, erfolgt keine Zuordnung zu einer Flächendefektklasse. In diesem Fall wird der gesamte abgebildete Werkzeugbereich als frei von Flächendefekten eingestuft. Allgemein wird hier unter einem "Flächendefekt" ein Defekt im inneren Bereich der abgebildeten Werkzeugoberfläche verstanden. So kann beispielsweise eine Materialveränderung durch Korrosion oder anderweitige chemische Reaktion oder eine Änderung der Oberflächenrauigkeit durch mechanischen Abrieb zu einem veränderten Aussehen der Werkzeugoberfläche führen, was in dem erfindungsgemäßen Verfahren bei einem geeigneten Schwellenwert und einer geeigneten Ähnlichkeitsmetrik die Einstufung als Flächendefekt zur Folge hat.

Die Bewertung der Ähnlichkeit und gegebenenfalls die Einstufung als Flächendefekt wird zweckmäßigerweise nur für die Superpixel im Werkzeugbereich des Arbeitsdatensatzes durchgeführt. Diejenigen Superpixel, für welche der Ähnlichkeitsschwellenwert erreicht oder überschritten ist, verbleiben bei der Einstufung zur Werkzeugklasse, und nur bei Unterschreitung des Schwellwerts erfolgt gegebenenfalls eine Zuordnung zur Flächendefektklasse.

Ein wesentlicher Vorteil des erfindungsgemäßen Verfahrens im Vergleich zur herkömmlichen CV-basierten Defekterkennung bei Werkzeugen besteht darin, dass kein Training eines neuronalen Netzwerks auf spezifische Werkzeugklassen und/oder spezifische Defektarten benötigt wird. Vielmehr erfolgt die Einstufung des jeweiligen Arbeits-Superpixels im Werkzeugbereich als "Flächendefekt" oder "unbeschädigtes Werkzeug" (bei Beibehaltung der Einstufung in die Werkzeugklasse) nur auf Grundlage einer Ähnlichkeitsmetrik im Vergleich zu den Referenz-Superpixeln im Werkzeugbereich des Referenzdatensatzes. Die automatisierte Bewertung dieser Ähnlichkeit kann grundsätzlich KI-basiert und insbesondere unter Verwendung eines künstlichen neuronalen Netzwerks erfolgen. Der entscheidende Unterschied zu den herkömmlichen KI-basierten Defekterkennungs-Verfahren ist jedoch, dass ein solches neuronales Netzwerk für die Ähnlichkeitsbewertung "generisch trainiert" sein kann. Unter einem solchen "generischen Training" soll hier verstanden werden, dass das neuronale Netzwerk nicht auf den für die Überwachung relevanten spezifischen Werkzeugtyp und erst recht nicht auf spezifische Defektarten trainiert wurde, sondern allgemein auf die Bewertung von Ähnlichkeiten (z.B. von Intensitäten, Mustern und/oder Formen) in einer Vielzahl von Bildern, insbesondere in standardisierten, von einem Werkzeug unabhängigen Bildern, wie sie z.B. im Datensatz BSDS500 (Berkeley Segmentation Data Set 500) enthalten sind. In einem solchen Datensatz müssen keine Bilder von Werkzeugen enthalten sein.

Der Erfindung liegt die Erkenntnis zugrunde, dass es nicht nötig ist, neuronale Netzwerke zu verwenden, welche speziell auf die Bilderkennung für Werkzeuge trainiert sind (und insbesondere auf die Erkennung von Defekten auf solchen Werkzeug-Bildern), sondern dass es ausreicht, eine allgemeine Ähnlichkeit zwischen den Werkzeug-Superpixeln eines Arbeitsdatensatzes und den Werkzeug-Superpixeln eines Referenzdatensatzes zu ermitteln. Wichtig ist hierfür nur die Hinterlegung eines geeigneten Referenzdatensatzes und die Verwendung einer passenden Ähnlichkeits-Metrik sowie eines geeigneten Schwellenwertes für die Ähnlichkeit. Idealerweise weisen dabei der erste Bilddatensatz und der zweite Bilddatensatz eine ähnliche oder gleiche Auflösung und bevorzugt auch eine ähnliche oder gleiche Belichtung, Bildgröße und/oder Ausrichtung des Werkzeugs auf. Hierbei ist jedoch keine völlige Übereinstimmung nötig, da über die Festlegung des anzuwendenden Ähnlichkeitsschwellenwertes eingestellt werden kann, welche Arbeits-Superpixel im Werkzeugbereich trotz gewisser Abweichungen von den Referenz-Superpixeln noch als "unbeschädigtes Werkzeug" klassifiziert werden. Wenn einmal ein geeigneter Referenzdatensatz entsprechend den Schritten a1) bis a3) aufgenommen und bereitgestellt worden ist, so kann anschließend eine Vielzahl von Arbeitsdatensätzen gemäß Schritt b) bereitgestellt werden, und derselbe Referenzdatensatz kann für eine Vielzahl von Klassifikationen gemäß Schritt c) verwendet werden, beispielsweise um dasselbe Werkzeug im laufenden Betrieb gelegentlich auf Veränderungen zu überwachen.

Wesentlich ist, dass die Bewertung der Ähnlichkeit in Schritt c1) auf der Ebene der Superpixel erfolgt, da eine Ähnlichkeitsbewertung auf der Ebene einzelner Bildpunkte eine sehr hohe Anzahl von vergleichsweise unähnlichen Bereichen ergeben würde und damit eine feinkörnigere und entsprechend häufigere Zuordnung als Flächendefekte. Außerdem könnte die Ähnlichkeit einzelner Pixel nur aufgrund von Intensitäten und nicht aufgrund von Formen bzw. Mustern bewertet werden. Mit dem erfindungsgemäßen Verfahren wird also insgesamt eine effiziente und zuverlässige automatisierte Erkennung von Flächendefekten ermöglicht. Dadurch, dass auf ein werkzeugspezifisches Training eines neuronalen Netzwerks verzichtet werden kann, ist das Verfahren sehr flexibel und kann mit geringem Aufwand für verschiedene Arten von Werkzeugen eingesetzt werden.

Das erfindungsgemäße Analysesystem dient zur Überwachung des Zustands eines Werkzeugs. Es umfasst eine Aufnahmeeinheit, eine Recheneinheit und eine Speichereinheit. Insgesamt ist das Analysesystem dazu eingerichtet, das erfindungsgemäße Verfahren durchzuführen. So können insbesondere mit der Aufnahmeeinheit der erste Bilddatensatz gemäß Schritt a1) und der zweite Bilddatensatz gemäß b1) erzeugt werden. Mit der Recheneinheit kann die automatisierte Segmentierung der Bilddatensätze gemäß den Schritten a2) und b2) erfolgen. Außerdem kann die Zuordnung gemäß den Schritten a3) und b3) computergestützt mit Hilfe dieser Recheneinheit erfolgen. Die insgesamt bereitgestellten Referenz- und Arbeitsdatensätze können z.B. am Ende der Schritte a) und b) mittels der Speichereinheit gespeichert werden. Auch die Ähnlichkeitsbewertung gemäß Schritt c1) und die Zuordnung gemäß c2) können mittels der Recheneinheit erfolgen, und das Ergebnis der einzelnen Zuordnungen kann wiederum mit der Speichereinheit abgespeichert werden. Das erfindungsgemäße Computerprogrammprodukt umfasst Befehle, wobei die Befehle bei der Ausführung des Computerprogrammprodukts auf einem Computer diesen dazu veranlassen, das erfindungsgemäße Verfahren auszuführen. Die Vorteile des Analysesystems und des Computerprogrammprodukts ergeben sich analog zu den oben beschriebenen Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens auch bei dem Analysesystem bzw. dem Computerprogrammprodukt realisiert werden, und umgekehrt.

Gemäß einer allgemein vorteilhaften Ausführungsform kann das Verfahren den folgenden zusätzlichen Schritt umfassen:
d) automatisierte Klassifikation von Randdefekten durch
d0) Anwendung einer Bildtransformation auf den Referenzdatensatz und/oder den Arbeitsdatensatz, um eine Übereinstimmung der Ausrichtung der jeweiligen Werkzeugbereiche zu erreichen, zumindest falls ein Versatz zwischen den Werkzeugbereichen vorliegt, welcher einen vorgegebenen Schwellwert überschreitet,
d1) Vergleich der Werkzeugbereiche des Referenzdatensatzes und des Arbeitsdatensatzes,
d2) Zuordnung der Bildpunkte des Arbeitsdatensatzes, welche im Werkzeugbereich des Arbeitsdatensatzes und nicht im Werkzeugbereich des Referenzdatensatzes liegen, zu einer Materialaufbauklasse und
d3) Zuordnung der Bildpunkte des Arbeitsdatensatzes, welche im Werkzeugbereich des Referenzdatensatzes und nicht im Werkzeugbereich des Arbeitsdatensatzes liegen, zu einer Materialabtragungsklasse.

Unter Randdefekten werden allgemein Veränderungen des Werkzeugs verstanden, welche im Umrissbereich des aufgenommenen Bilddatensatzes liegen. Hierbei kann es sich entweder um einen Zuwachs an Material handeln, z.B. durch Ablagerungen von Material aus den bearbeiteten Werkstücken, oder um eine Abtragung von Material, z.B. durch Abplatzen, Abrasion oder die Bildung von Einrissen, Rillen oder Furchen. Im ersten Fall vergrößert sich die Umrisslinie des Werkzeugs vom Referenzdatensatz zum Arbeitsdatensatz, und die zu dieser Vergrößerung gehörenden Pixel des Arbeitsdatensatzes werden entsprechend einer Materialaufbauklasse zugeordnet. Im zweiten Fall verkleinert sich die Umrisslinie des Werkzeugs vom Referenzdatensatz zum Arbeitsdatensatz, und die zu dieser Verkleinerung gehörenden Pixel des Arbeitsdatensatzes werden entsprechend einer Materialabtragungsklasse zugeordnet. Die Materialaufbauklasse und die Materialabtragungsklasse stellen also zwei verschiedene Untergruppen von Randdefekten dar. Der Vergleich der beiden Datensätze im Teilschritt d1) kann insbesondere durch eine Differenzbildung erfolgen oder auch durch eine überlagerte Darstellung.

Durch die Ausführungsform mit dem zusätzlichen Schritt d) wird ein weiterer Nachteil von herkömmlichen Defektklassifizierungen adressiert, nämlich dass bei der Defektanalyse von nur einem einzelnen Werkzeugbild keine Materialabtragung und kein Materialaufbau erkannt werden kann. Bei der beschriebenen Ausführungsform wird dieses Problem dadurch gelöst, dass die Randeffekte durch einen Vergleich der Umrisslinien zwischen Referenzdatensatz und Arbeitsdatensatz ermittelt werden. Im Unterschied zur Klassifikation der Flächendefekte, welche gemäß Schritt c) auf der Ebene der Superpixel stattfindet, werden die Randdefekte feingranularer bestimmt, da die Veränderungen der Umrisslinie auf der Ebene einzelner Pixel erfasst werden können. So können die ermittelten Randdefekte insbesondere kleiner oder größer sein als die dort vorliegenden Superpixel, und die Form der Randdefekte kann sich von der Form der dort vorliegenden Superpixel unterscheiden. Dies ist zweckmäßig, da die Ablagerung bzw. Abtragung von Material häufig auf einer ganz anderen Größen- und/oder Formskala stattfindet als die in den Schritten a2) und b2) erfolgte Segmentierung der jeweiligen Flächen in Superpixel, welche sich zweckmäßig an der Größe von typischen Flächendefekten orientieren kann. Mit der beschriebenen unterschiedlichen Zuordnung von Flächendefekten und Randdefekten kann also dem Sachverhalt Rechnung getragen werden, dass diese Defekttypen nicht nur an unterschiedlichen Positionen auftreten, sondern häufig auch unterschiedliche Formen und Größen aufweisen. Mit der darauf angepassten unterschiedlichen Ermittlung der einzelnen Defekttypen kann eine effiziente automatisierte Zuordnung erfolgen, wobei auch für den zusätzlichen Schritt d) kein werkzeugspezifisches Training eines ML-Systems erforderlich ist. Die zusätzlichen Teilschritte von d1) bis b3) können insbesondere durch klassische Bildbearbeitungsalgorithmen durchgeführt werden.

Der optionale Schritt d0) kann zumindest dann durchgeführt werden, wenn ein Versatz bzw. eine Verzerrung zwischen den Werkzeugbereichen vorliegt, welche(r) einen vorgegebenen Schwellenwert überschreitet. Mit anderen Worten kann hier vor dem Vergleich der beiden Datensätze eine Bildkorrektur durchgeführt werden, um im Falle von leicht unterschiedlichen Aufnahmebedingungen (z.B. unterschiedlicher Aufnahmewinkel bzw. unterschiedlicher Abstand zur Kamera) die beiden Umrisslinien in möglichst gute Übereinstimmung zu bringen. Geeignete Verfahren zur Bildtransformation zur Korrektur von Verzerrungen und Fehlausrichtungen sind aus dem Stand der Technik hinreichend bekannt. Nur die nach einer solchen Korrektur verbleibenden Änderungen im Umriss werden dann (sofern sie vorliegen) den beiden Randdefekt-Klassen zugeordnet. Optional kann im Zuge der Bildtransformation auch die Zahl der Bildpunkte verändert (z.B. verringert) werden. In diesem Fall ist es zweckmäßig, wenn vor dem Vergleich beide Datensätze einer entsprechenden Veränderung der Pixelanzahl unterworfen werden.

Gemäß einer weiteren allgemein vorteilhaften Ausführungsform umfasst das Verfahren den folgenden zusätzlichen Schritt:
e) Bereitstellung eines übergeordneten Klassifikationsdatensatzes, im welchem die einzelnen Bildpunkte des zweiten Bilddatensatzes entsprechend den Schritten b3), c2), d2) und d3) jeweils einer von wenigstens fünf semantischen Klassen zugeordnet sind, welche die Hintergrundklasse, die Werkzeugklasse, die Flächendefektklasse, eine Materialaufbauklasse und eine Materialabtragungsklasse umfassen.

Mit anderen Worten werden bei dieser Ausführungsform die Ergebnisse der Klassifikationen von Flächendefekten und Randdefekten in einem übergeordneten Datensatz zusammengeführt, welcher die Zuordnung von allen mit dem Verfahren ermittelten Defekten enthält. Diese Zuordnung kann insbesondere auf der Ebene einzelner Bildpunkte zusammengeführt werden, wobei gegebenenfalls die Anzahl der Bildpunkte gegenüber den Ursprungsdaten verändert (insbesondere reduziert) sein kann. Der übergeordnete Klassifikationsdatensatz enthält dann wenigstens fünf Klassen, nämlich die drei beschriebenen Defektklassen sowie eine Klasse für den Hintergrundbereich und eine Klasse für die unbeschädigten Bereiche des Werkzeugs. Dieses übergeordnete Klassifikationsergebnis kann zweckmäßig anschließend einem Benutzer zur Verfügung gestellt werden, beispielsweise über eine graphische Benutzerschnittstelle.

Allgemein vorteilhaft können die automatisierten Segmentierungen in den Schritten a2) und/oder b2) jeweils unter Verwendung wenigstens eines künstlichen neuronalen Netzwerkes erfolgen. Alternativ oder zusätzlich kann die Ähnlichkeitsbewertung in Schritt c1) unter Verwendung wenigstens eines künstlichen neuronalen Netzwerks erfolgen. Beide Arten von Schritten können durch solche KI-basierten Systeme besonders einfach und effizient umgesetzt werden. Besonders vorteilhaft kann das jeweilige neuronale Netzwerk (oder ein Teil davon) ein faltendes neuronales Netzwerk sein (CNN für englisch: convolutional neural network). Faltende neuronale Netzwerke stellen einen besonderen Typ von mehrschichtigen neuronalen Netzwerken dar, welche zur Prozessierung von Daten mit einer gitterartigen Struktur (wie bei pixelierten Bilddatensätzen) besonders geeignet sind. Hierzu weist ein CNN ein oder mehrere faltende Schichten (Convolutional Layer) auf, an welche sich gegebenenfalls ein oder mehrere Pooling-Schichten (Pooling Layer) und/oder ein oder mehrere vollverbundene Schichten (Fully-Connected Layer) anschließen können. Sowohl die Segmentierung in Superpixel als auch die Bewertung von Ähnlichkeiten zwischen Superpixeln können besonders effizient mit solchen CNNs automatisiert ausgeführt werden, wobei wiederum nur ein generisches Training, jedoch kein werkzeugspezifisches Training erforderlich ist.

Allgemein können daher bei dieser Ausführungsform die Schritte a), b) und c) (sowie optional auch d) und e)) mehrfach hintereinander für unterschiedliche Typen von Werkzeugen durchgeführt werden. Dabei bleibt insbesondere das wenigstens eine verwendete künstliche neuronale Netzwerk unverändert. Mit anderen Worten erfolgt keine Anpassung des neuronalen Netzwerks durch ein werkzeugspezifisches Training aufgrund des geänderten Werkzeugtyps. Dies ist bei dem beschriebenen Verfahren vorteilhaft nicht notwendig, da die eingesetzten neuronalen Netzwerke wie oben beschrieben an standardisierten Bilddatensätzen generisch trainiert sein können, wobei insbesondere keine Bilddaten von ähnlichen Werkzeugen zum Einsatz kommen müssen. Dies ist zwar möglich, aber nicht erforderlich.

Allgemein besonders vorteilhaft kann in den Schritten a2) und/oder b2) die automatisierte Segmentierung in Superpixel unter Verwendung eines sogenannten Superpixel-Sampling-Netzwerks (SSN) erfolgen. Die SSN-Methode basiert auf dem SLIC-Algorithmus, stellt aber eine differenzierbare Variante dieses Algorithmus dar und eignet sich daher besonders, um in einem künstlichen neuronalen Netzwerk implementiert zu werden, welches mit Deep-Learning-Methoden generisch trainiert werden kann. Die SSN-Methode ist im Stand der Technik hinreichend bekannt und wird z.B. im Artikel "Superpixel Sampling Networks" von V. Jampani et al. in ECCV 2018, Lecture Notes in Computer Science, ausführlich beschrieben. Alternativ zu der SNN-Methode kann aber auch ein einfacher SLIC-Algorithmus oder ein anderer auf SLIC basierender Algorithmus bei der Segmentierung zum Einsatz kommen.

Gemäß einer weiteren bevorzugten Ausführungsform kann die Zuordnung der einzelnen Superpixel zu den semantischen Klassen in den Schritten a3) und/oder b3) entweder automatisiert oder semi-automatisiert erfolgen. Mit anderen Worten kann es sich um eine computergestützte Klassenzuordnung handeln, die entweder vollständig automatisiert oder unter Verwendung einer Benutzereingabe erfolgt. Beispielsweise kann die jeweilige Klassenzuordnung unter Verwendung eines sogenannten k-Means-basierten Algorithmus erfolgen. Ein k-Means-Algorithmus, der im Englischen auch als k-Means Clustering bezeichnet wird, ist ein automatisiertes Verfahren zu Clusteranalyse, bei dem aus einer Menge von ähnlichen Objekten (hier den Superpixeln) eine vorher bekannte Anzahl k von Gruppen gebildet wird. Die Verwendung von solchen k-Means-Algorithmen ist im Stand der Technik vor allem in der Bildverarbeitung weit verbreitet. Auch die bekannten Erweiterungen des k-Median-Algorithmus, k-Medoids-Algorithmus und des k-Means++-Algorithmus sollen unter dem Begriff der k-Means-basierten Algorithmen eingeschlossen sein. Die Größe k wird dabei typischerweise vom Benutzer vorgegeben. Wenn zum Beispiel ein Bilddatensatz mit einer bestimmten Anzahl von Superpixeln in einen einfach zusammenhängenden Werkzeugbereich und einen einfach zusammenhängenden Hintergrundbereich unterteilt werden soll, dann kann für k der Wert 2 festgelegt werden. Der Wert von k kann innerhalb der Schritte a) bzw. b) von einem Nutzer festgelegt und/oder bei Bedarf auch korrigiert werden, falls z.B. eine komplexere Werkzeuggeometrie einen höheren Wert von k erfordern sollte.

Allgemein und unabhängig vom verwendeten Algorithmus kann die Zuordnung der Superpixel zu den semantischen Klassen in den Schritten a3) und/oder b3) einen Teilschritt einer computergestützten Überprüfung der Zuordnung durch einen Benutzer und/oder einer computergestützten Festlegung einer Zuordnung durch einen Benutzer umfassen. So kann gemäß der ersten Variante zunächst eine automatisierte Zuordnung erfolgen, und der Benutzer kann überprüfen, ob diese automatisierte Zuordnung den Werkzeugumriss korrekt wiedergibt. Falls dies nicht der Fall ist, kann vom Benutzer eine korrigierte Umrisslinie eingegeben werden, anderenfalls kann die automatisch ermittelte Zuordnung für die nachfolgenden Schritte übernommen werden. Bei der zweiten Variante kann der Benutzer in einer vom Computer bereitgestellten Umgebung (z.B. innerhalb einer graphischen Benutzeroberfläche) eine manuelle Zuordnung festlegen. So kann der Benutzer beispielsweise in einer Abbildung des jeweiligen Bilddatensatzes eine Linie für den Werkzeugumriss ziehen bzw. einzeichnen. Innerhalb der beschriebenen Schritte a3) bzw. b3) erfolgt die Zuordnung zu den Werkzeug- und Hintergrundklassen generell auf der Ebene der Superpixel. Optional ist es aber auch möglich, dass bereits vor dem Schritt a2) bzw. b2) eine manuelle Festlegung des Werkzeugumrisses auf Pixelebene durch eine Benutzereingabe erfolgt. In diesem Fall kann die Zuordnung auf Superpixel-Ebene im Schritt a3) bzw. b3) auf Grundlage der vorab vom Benutzer auf Pixel-Ebene festgelegten Zuordnung erfolgen.

Bei denjenigen Ausführungsformen, bei denen in den Schritten a3) und/oder b3) eine Überprüfung und/oder Festlegung der Zuordnung durch einen Benutzer stattfindet, kann es sich hierbei besonders bevorzugt um die einzigen Benutzer-Eingaben handeln, welche innerhalb der Schritte a2), a3), b2, b3) und c) erfolgen. Optional beinhaltet auch Schritt d) keine weitere Benutzereingabe. Mit anderen Worten erfolgen die übrigen bildverarbeitenden Schritte ohne eine weitere Interaktion mit dem Benutzer, da hier vor allem mit den beschriebenen KI-basierten Methoden vergleichsweise einfach und effizient eine automatisierte Segmentierung, Zuordnung und Ähnlichkeitsbewertung erfolgen kann. Eine optionale Benutzereingabe bei der Festlegung des Werkzeugumrisses kann jedoch zweckmäßig sein, vor allem um Rechenzeit einzusparen und/oder um eine zuverlässige Zuordnung von Randdefekten im Umrissbereich zu ermöglichen, insbesondere wenn die verwendeten neuronalen Netzwerke nicht speziell auf die Bildverarbeitung von Werkzeugbildern trainiert wurden.

Gemäß einer weiteren allgemein vorteilhaften Ausführungsform kann die automatisierte Bewertung der Ähnlichkeit in Schritt c1) mit einem künstlichen neuronalen Netzwerk auf Basis einer Metric Learning Methode und insbesondere der Deep Metric Learning Methode (DML) erfolgen. Bei der DML-Methode wird typischerweise ein Modul zur Merkmalsextraktion eingesetzt, beispielsweise ein nicht-lineares CNN-basiertes Modul. Ein solches Modul zur Merkmalsextraktion wird im Stand der Technik häufig auch als Encoder bezeichnet. Dabei werden von dem Modul extrahierte Bildmerkmale in einen Merkmalsraum eingebettet. Zum jeweiligen Bildmerkmal gehört ein Vektor im Merkmalsraum, und je ähnlicher zwei Bildmerkmale sind, desto geringer ist ihr Abstand im zugehörigen Merkmalsraum. Die DML-Methode wird beispielsweise im Artikel "Deep Metric Learning: A Survey" von M. Kaya und H.S. Bilge in Symmetry 2019, 11, 1066 ausführlich beschrieben. Entscheidend für eine erfolgreiche und effiziente Anwendung dieser Methode sind die Wahl geeigneter Input-Daten beim Training des neuronalen Netzwerks, die Netzwerkstruktur und die Wahl einer geeigneten metrischen Verlustfunktion beim Training. So kann das bei der DML-Methode verwendete neuronale Netzwerk besonders vorteilhaft ein siamesisches Netzwerk oder ein Triplet-Netzwerk sein. Ein solches Netzwerk kann unter Verwendung einer geeigneten metrischen Verlustfunktion (wie beispielsweise kontrastiver Verlust, Triplet-Verlust, strukturierte Verlust und andere im o.g. Artikel beschriebene Verlustfunktionen) trainiert werden. Das Netzwerk kann insbesondere generisch trainiert sein, also ohne die Verwendung von werkzeugspezifischen Trainingsdaten. Nach einem solchen Training können mit einem DML-Netzwerk auch kleine Unterschiede zwischen Bildbereichen differenziert und bewertet werden. Damit ermöglicht die auf der DML-Methode basierende Ähnlichkeitsbewertung der Superpixel auch eine zuverlässige Zuordnung zu Defektklassen und insbesondere eine Einstufung als Flächendefekt oder als unbeschädigter Werkzeugbereich, wenn ein geeigneter Schwellenwert für die Ähnlichkeit verwendet wird. Die Ausgabe des DML-Netzwerks bei einem Vergleich zweier Bildbereiche kann beispielsweise binär sein (mit einer Klassifikation als "ähnlich" oder "unähnlich") oder auch diskrete oder kontinuierliche Ähnlichkeitswerte beinhalten, die auf dem Abstand im Merkmalsraum basieren.

Alternativ zu der DML-Methode können auch andere KI-basierte Methoden zur Ähnlichkeitsbewertung verwendet werden, wobei gegebenenfalls trainierte neuronale Netzwerke zum Einsatz kommen können. Es kann alternativ aber auch eine Ermittlung eines Ähnlichkeitswertes mit einem herkömmlichen Algorithmus erfolgen, z.B. basierend auf einem einfachen Vergleich von Bildintensitäten.

Allgemein vorteilhaft umfasst Schritt c1) die Bewertung der Ähnlichkeit des jeweiligen Arbeits-Superpixels mit allen Referenz-Superpixeln im Werkzeugbereich des Referenzdatensatzes. Dabei wird diese Ähnlichkeitsbewertung für alle Arbeits-Superpixel im Werkzeugbereich des Arbeitsdatensatzes wiederholt. Mit anderen Worten werden bei dieser Ausführungsform alle Arbeits-Superpixel im Werkzeugbereich mit allen Referenz-Superpixeln im Werkzeugbereich verglichen, und es wird für jedes Vergleichspaar ein Wert für die Ähnlichkeit ermittelt. Wenn insgesamt für ein gegebenes Arbeits-Superpixel die Ähnlichkeit mit der Gesamtheit der Referenz-Superpixel vergleichsweise niedrig ist, wird diesem Arbeits-Superpixel ein niedriger Gesamt-Ähnlichkeitswert zugeordnet und es wird als Flächendefekt klassifiziert. Die Gesamt-Ähnlichkeitsbewertung für ein gegebenes Arbeits-Superpixel kann dabei beispielsweise durch eine Mittelung der Ähnlichkeitswerte aus allen relevanten Einzelvergleichen erfolgen. Es sind aber auch zahlreiche andere Berechnungsverfahren für die Gesamt-Ähnlichkeit möglich, bei denen beispielsweise einzelnen Ähnlichkeitswerten unterschiedliche Gewichte beigemessen werden und insbesondere die maximalen und/oder minimalen Ähnlichkeitswerte ein stärkeres Gewicht bekommen können.

Allgemein kann das Werkzeug, dessen Zustand mit dem Verfahren überwacht wird, ein Bearbeitungswerkzeug für eine Werkzeugmaschine sein, insbesondere für eine Werkzeugmaschine einer industriellen Fertigungsanlage. Beispielsweise kann es sich allgemein um ein Schneidwerkzeug, ein Drehwerkzeug, einen Drehmeißel, einen Fräser, einen Bohrer und/oder eine Wendeschneidplatte handeln.

Nachfolgend wird die Erfindung anhand einiger bevorzugter Ausführungsbeispiele unter Bezugnahme auf die angehängten Zeichnungen beschrieben, in denen:
- Figur 1: ein schematisches Ablaufdiagramm für die übergeordneten Verfahrensschritte a) bis e) zeigt,
- Figur 2: ein schematisches Ablaufdiagramm für die Teilschritte des Verfahrensschritts a) zeigt,
- Figur 3: das Ergebnis einer Segmentierung in Superpixel für einen Teil des Arbeitsdatensatzes zeigt,
- Figur 4: ein Ablaufdiagramm des Teilschrittes a2) zeigt,
- Figur 5: ein schematisches Ablaufdiagramm des Verfahrensschritts d) zeigt,
- Figur 6: eine schematische Darstellung des in Schritt e) bereitgestellten Klassifikationsdatensatzes zeigt und
- Figur 7: ein schematisches Übersichtsdiagramm eines Analysesystems zeigt.

In den Figuren sind gleiche oder funktionsgleiche Elemente mit gleichen Bezugszeichen versehen.

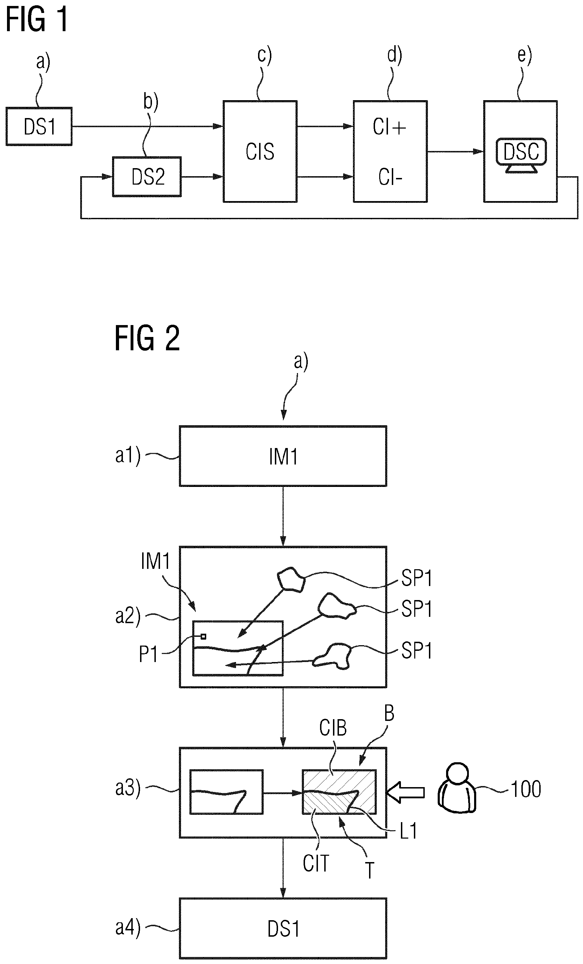

In Figur 1 ist ein schematisches Ablaufdiagramm für die übergeordneten Verfahrensschritte a) bis e) gezeigt, von denen insbesondere die Schritte a) bis d) jeweils die weiter oben beschriebenen Teilschritte aufweisen können, wie auch noch im Zusammenhang mit den Figuren 2 bis 5 erläutert wird. Dabei sind die Schritte d) und e) jeweils optional. So wird in Schritt a) ein Referenzdatensatz DS1 bereitgestellt, welcher einem Referenzzustand des Werkzeugs zugeordnet ist. Dies ist insbesondere ein unbeschädigter Zustand des Werkzeugs. In Schritt b) wird in analoger Weise ein Arbeitsdatensatz DS2 bereitgestellt, welcher einem Arbeitszustand des Werkzeugs zugeordnet ist. Dies ist insbesondere ein Zustand nach einer Benutzung des Werkzeugs, bei dem also ein potentieller Verschleiß eingetreten sein könnte. In Schritt c) werden unter Verwendung dieser beiden Datensätze DS1, DS2 automatisiert Flächendefekte im Arbeitsdatensatz DS2 klassifiziert und entsprechend einer Flächendefektklasse ClS zugeordnet, sofern solche Flächendefekte vorhanden sind. Im optionalen Schritt d) werden zusätzlich Randdefekte im Arbeitsdatensatz DS2 automatisiert klassifiziert, sofern solche Randdefekte vorhanden sind. Dabei findet eine Zuordnung zu einer Materialaufbauklasse Cl+ und/oder zu einer Materialabtragungsklasse Clstatt. Dies sind die beiden wichtigsten Defekttypen im Randbereich des in den jeweiligen Abbildungen dargestellten Werkzeugs. Im optionalen Schritt e) werden die Ergebnisse der vorhergehenden Schritte zusammengeführt, und die gegebenenfalls vorliegende Klassifikation nach den Defektklassen ClS, Cl+ und/oder Cl- wird in einem übergeordneten Klassifikationsdatensatz DSC bereitgestellt. Dieser kann beispielsweise über eine graphische Oberfläche einem Benutzer zur Verfügung gestellt werden.

Die Schritte b) bis e) können für dasselbe Werkzeug mehrfach wiederholt werden, wie durch das Schleifensymbol angedeutet. Dabei kann insbesondere jeweils derselbe Referenzdatensatz DS1 für das unverschlissene Werkzeug für den Vergleich herangezogen werden. Wenn mehrere Werkzeuge auf ihren Verschleiß überwacht werden sollen, kann die gesamte Abfolge a) bis e) mehrfach wiederholt werden. Dabei ist es besonders vorteilhaft, wenn gegebenenfalls zum Einsatz kommende neuronale Netzwerke auch bei einem Wechsel des Werkzeugtyps unverändert bleiben und somit nicht spezifisch für den jeweiligen Werkzeugtyp trainiert werden.

In Figur 2 ist ein schematisches Ablaufdiagramm für die Teilschritte a1) bis a4) des Verfahrensschrittes a) gezeigt. Im Teilschritt a1) wird zunächst ein erster Bilddatensatz IM1 erzeugt. Dazu wird ein Bild des betrachteten Werkzeugs in einem verschleißrelevanten Bereich aufgenommen. Dieser Bilddatensatz IM1 kann beispielsweise mit einer digitalen Kamera erzeugt worden sein. Im Teilschritt a2) wird der erste Bilddatensatz IM1, der eine Vielzahl von ersten Bildpunkten P1 umfasst, in eine Anzahl von Superpixeln SP1 segmentiert. Die Segmentierung kann automatisiert erfolgen, beispielsweise unter Verwendung eines neuronalen Netzwerks und insbesondere eines Superpixel-Sampling-Netzwerks. Im Teilschritt a3) werden die so gebildeten Superpixel SP1 wenigstens zwei semantischen Klassen zugeordnet, nämlich einer Werkzeugklasse ClT und einer Hintergrundklasse ClB. Hierdurch werden ein Werkzeugbereich T und ein Hintergrundbereich B des Referenzdatensatzes DS1 definiert. Bei der einfachen schematischen Abbildung der Figur 2 sind dies jeweils einfach zusammenhängende Bereiche T und B, welche entsprechend durch eine einfache Umrisslinie L1 getrennt sind. Bei komplexeren Werkzeuggeometrien können jedoch auch mehrere solche Umrisslinien vorliegen, und die Bereiche B und/oder T können optional mehrere nicht miteinander verbundene Teilbereiche umfassen. Die Zuordnung zu den wenigstens zwei semantischen Klassen kann insbesondere mit einem k-Means-basierten Algorithmus erfolgen. Sie kann optional durch einen Benutzer 100 überprüft oder festgelegt werden, wobei diese Überprüfung bzw. Festlegung vorteilhaft computergestützt erfolgt. Im optionalen, abschließenden Teilschritt a4) wird der Referenzdatensatz DS1 gespeichert. Dieser Referenzdatensatz DS1 enthält hier sowohl die Bildinformationen (z.B. Intensitätswerte) zu den einzelnen Bildpunkten P1, als auch die entsprechenden Informationen zu den einzelnen Superpixeln SP1, die Zuordnung der Bildpunkte P1 zu den jeweiligen Superpixeln SP1 sowie die Zuordnung der Superpixel SP1 zu den Klassen ClB, ClT und ClS. Alternativ zu der hier dargestellten Speicherung am Ende des Schrittes a) können diese Daten auch jeweils zum Zeitpunkt ihrer Entstehung bzw. Festlegung in dem Datensatz DS1 gespeichert werden. Wesentlich ist, dass am Ende des Verfahrensschrittes a) ein Datensatz DS1 mit den beschriebenen Informationen für den nachfolgenden Schritt c) zur Verfügung gestellt wird.

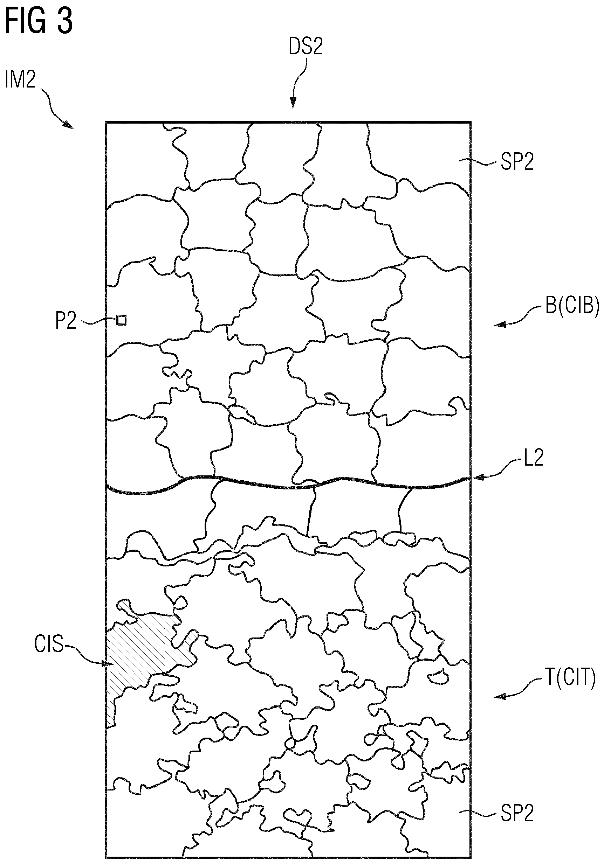

In analoger Weise umfasst der Verfahrensschritt b) ebenfalls Teilschritte b1) bis b4). Diese sind analog zu den Teilschritten a1) bis a4) und werden daher nicht gesondert dargestellt. Figur 3 zeigt jedoch das Ergebnis für einen Teilbereich des im Verfahrensschritt b) erhaltenen Arbeitsdatensatzes DS2. So wurde im Teilschritt b1) ein zweiter Bilddatensatz IM2 erzeugt, der wiederum eine Vielzahl von zweiten Bildpunkten P2 umfasst. Diesem Bild überlagert ist die Segmentierung in Arbeits-Superpixel SP2 dargestellt, wie sie im Teilschritt b2) erhalten wurde. Außerdem ist die Aufteilung dieser Arbeits-Superpixel SP2 in einen Werkzeugbereich T und einen Hintergrundbereich B gezeigt sowie die dazwischen verlaufende Umrisslinie L2. Diese Aufteilung wurde wiederum im Teilschritt b3) durch die Zuordnung zu den beiden semantischen Klassen ClT und ClB erreicht, analog zum Referenzdatensatz DS1.

Zusätzlich zu der Einteilung in die Bereiche T und B zeigt Figur 3 auch ein beispielhaftes Arbeits-Superpixel, welches der Flächendefektklasse ClS zugeordnet wurde. Diese Zuordnung erfolgt innerhalb des Schritts c), bei welchem beide Datensätze DS1 und DS2 verwendet werden. Schritt c) umfasst dazu einen Teilschritt c1), bei welchem die Arbeits-Superpixel SP2 im Werkzeugbereich T des Arbeitsdatensatzes DS2 bezüglich ihrer Ähnlichkeit mit den Referenz-Superpixeln SP1 im Werkzeugbereich des Referenzdatensatzes DS1 bewertet werden. Diese Ähnlichkeitsbewertung erfolgt automatisiert, beispielsweise unter Verwendung eines dafür geeigneten künstlichen neuronalen Netzwerks. Besonders vorteilhaft kann dabei die Deep Metric Learning Methode zum Einsatz kommen, beispielsweise unter Verwendung eines siamesischen Netzwerks und/oder eines Triplet-Netzwerks. In dem Teilschritt c1) kann die Ähnlichkeit von allen Arbeits-Superpixeln SP2 im Werkzeugbereich T mit allen Referenz-Superpixeln SP1 im Werkzeugbereich T ermittelt werden. Die dabei als den Referenz-Superpixeln SP1 insgesamt vergleichsweise unähnlich eingestuften Arbeits-Superpixel SP2 des Werkzeugbereichs T werden dann im nachfolgenden Schritt c2) der Flächendefektklasse ClS zugeordnet.

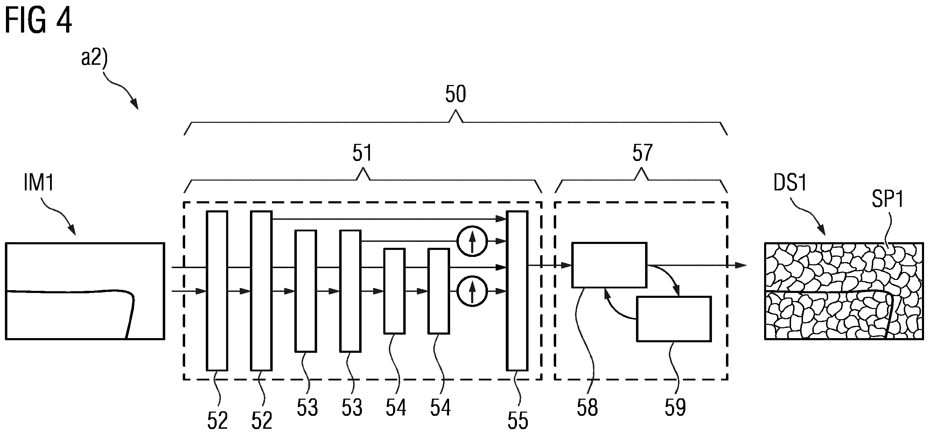

In Figur 4 ist ein schematisches Ablaufdiagramm des Teilschrittes a2) nach einem Ausführungsbeispiel der Erfindung gezeigt. Auch der Teilschritt b2) kann in entsprechender Weise umgesetzt sein. Im gezeigten Beispiel erfolgt die Segmentierung des ersten Bilddatensatzes IM1 in Referenz-Superpixel SP1 unter Verwendung eines Superpixel-Sampling-Netzwerks 50. Der Aufbau und die Funktionsweise dieses SSN 50 sind in diesem Beispiel analog wie in dem o.g. Artikel von V. Jampani et al. beschrieben realisiert und werden daher hier nur zusammenfassend dargestellt. So umfasst das SSN 50 ein tiefes faltendes neuronales Netzwerk 51, auf welches ein differenzierbarer SLIC-Algorithmus 57 folgt. Das tiefe faltende Netzwerk 51 umfasst mehrere aufeinanderfolgende Faltungsebenen 52, 53, 54, gefolgt von einer letzten Ebene 55. Jede Faltungsebene 52, 53, 54 enthält dabei beispielsweise eine Faltungsschicht im eigentlichen Sinn sowie eine Aktivierungsfunktion, insbesondere eine Gleichrichter- bzw. Rectifier-Aktivierungsfunktion, die auch als Rectified Linear Unit-Aktivierungsfunktion (kurz RELU-Aktivierungsfunktion) bezeichnet werden kann. Ein Teil der Faltungsebenen kann weiterhin jeweils eine Batch-Normalisierung und/oder Pooling-Schicht umfassen. Die jeweilige Pooling-Schicht kann beispielsweise zum Durchführen eines 2x2 Maximalwertpoolings oder eines 2x2 Durchschnittswertpoolings ausgestaltet sein. Vor der letzten Ebene 55 kann optional ein sogenanntes Upsampling erfolgen, um dort wieder die ursprüngliche Bildauflösung zu erreichen, wie durch die nach oben gerichteten Pfeile und die Höhe der Balken angedeutet ist.

Auf die letzte Ebene 55 folgt der SLIC-Algorithmus 57, bei dem in einer schleifenförmigen Abfolge die beiden Teilschritte 58 und 59 mehrfach iterativ durchlaufen werden. Dabei erfolgt im Teilschritt 58 jeweils eine Neuberechnung der Superpixel-Assoziationen und im Teilschritt 59 jeweils eine Neuberechnung der Superpixel-Zentren. Mit Hilfe eines solchen SSN 50 kann auf einfache Weise ein KI-basiertes Verfahren zur automatisierten Bild-Segmentierung zur Verfügung gestellt werden, wobei das neuronale Netzwerk insbesondere generisch (und somit unabhängig vom verwendeten Werkzeugtyp) trainiert werden kann.

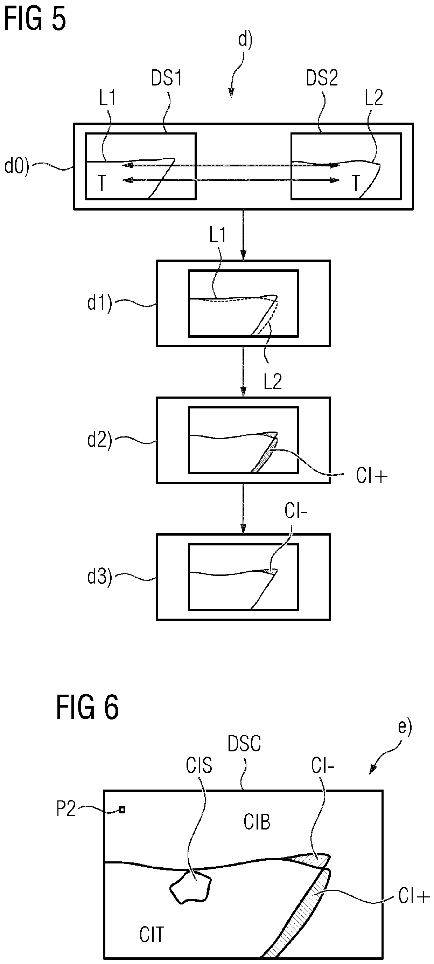

Figur 5 zeigt ein schematisches Ablaufdiagramm des optionalen Verfahrensschrittes d), der in diesem Beispiel die Teilschritte d0) bis d3) umfasst. Im Teilschritt d0) wird zunächst eine Bildtransformation durchgeführt, um eine Übereinstimmung der Ausrichtung der jeweiligen Werkzeugbereiche T zu erreichen. Eine solche Bildtransformation kann auf den Referenz-Datensatz DS1 oder auf den Arbeits-Datensatz DS2 oder auf beide Datensätze DS1 und DS2 angewendet werden. Grundsätzlich ist die Durchführung einer solchen Bildtransformation optional und nur dann notwendig, wenn ein Versatz zwischen den Werkzeugbereichen T in den beiden Datensätzen DS1 und DS2 vorliegt, welcher einen vorgegebenen Schwellwert überschreitet.

Im nachfolgenden Schritt d1) werden die Werkzeugbereiche T des Referenzdatensatzes DS1 und des Arbeitsdatensatzes DS2 miteinander verglichen, beispielsweise durch Differenzbildung. Im hier schematisch dargestellten Differenzbild bzw. Überlagerungsbild ist zu erkennen, dass auch nach der Bildtransformation die Umrisslinie L1 des Referenzdatensatzes DS1 nicht genau mit der Umrisslinie L2 des Arbeitsdatensatzes DS2 zusammenfällt. Die verbleibenden Unterschiede sind somit nicht auf eine Verzerrung bei der Bildaufnahme, sondern auf einen Aufbau bzw. eine Abtragung von Material bei der Benutzung des Werkzeugs zurückzuführen. Entsprechend werden im Schritt d2) die Bildpunkte P2 des Arbeitsdatensatzes DS2, welche im Werkzeugbereich T des Arbeitsdatensatzes DS2 und nicht im Werkzeugbereich T des Referenzdatensatzes DS1 liegen, einer Materialaufbauklasse Cl+ zugeordnet. Analog werden im Schritt d3) die Bildpunkte P2 des Arbeitsdatensatzes DS2, welche im Werkzeugbereich T des Referenzdatensatzes DS1 und nicht im Werkzeugbereich T des Arbeitsdatensatzes DS2 liegen, einer Materialabtragungsklasse Cl- zugeordnet. Die Reihenfolge dieser beiden Teilschritte d2) und d3) kann dabei grundsätzlich beliebig sein, und sie können auch gleichzeitig ablaufen.

Figur 6 zeigt eine schematische Darstellung des im optionalen Schritt e) bereitgestellten Klassifikationsdatensatzes DSC. In diesem übergeordneten Klassifikationsdatensatz DSC sind die einzelnen Bildpunkte P2 des zweiten Bilddatensatzes IM2 jeweils einer der vorab genannten wenigstens fünf semantischen Klassen zugeordnet, nämlich der Werkzeugklasse ClT, der Hintergrundklasse ClB, der Flächendefektklasse ClS, der Materialaufbauklasse Cl+ und der Materialabtragungsklasse Cl-. Dabei basiert die Zuordnung auf den oben beschriebenen Schritten b3) für die Zuordnung zu den Klassen ClB und ClT, c2) für die Zuordnung zur Klasse ClS, d2) für die Zuordnung zu Klasse Cl+ und d3) für die Zuordnung zur Klasse Cl-. Dabei können Bildpunkte P2, die im Schritt b3) zunächst einer der Klassen ClB bzw. ClT zugeordnet waren, in einem der nachfolgenden Schritte einer der Defektklassen ClS, Cl+ bzw. Cl- zugeordnet worden sein. Im übergeordneten Klassifikationsdatensatz DSC ist die Werkzeugklasse ClT daher nur noch den unbeschädigten Bereichen des Werkzeugs zugeordnet, welche nicht als Defekte klassifiziert wurden. Es ist insgesamt nicht zwingend erforderlich, dass alle fünf genannten Klassen tatsächlich zugeordnet sind. So ist es insbesondere möglich, dass das Werkzeug nicht oder nur geringfügig verschlissen ist und dass somit entweder gar keine der Defektklassen oder nur ein Teil der Defektklassen tatsächlich zugeordnet wurde. Der übergeordnete Klassifikationsdatensatz DSC kann beispielsweise einem Benutzer graphisch angezeigt oder anderweitig zur Verfügung gestellt werden, um ihn über den Abnutzungszustand des Werkzeugs zu informieren.

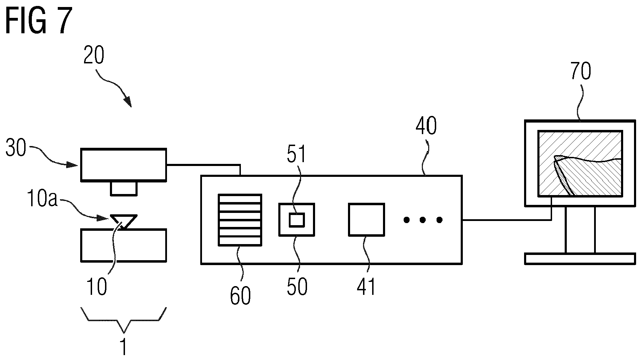

In Figur 7 ist ein schematisches Übersichtsdiagramm eines Analysesystems 20 nach einem Ausführungsbeispiel der Erfindung gezeigt. Insbesondere ist das Analysesystem 20 zur Durchführung des beschriebenen Verfahrens ausgestaltet. Das Analysesystem 20 umfasst eine Aufnahmeeinheit 30, welche beispielsweise mit einer Mikroskopkamera ausgestattet ist, um einen verschleißrelevanten Bereich 10a eines Werkzeugs 10 abzubilden. Beispielsweise kann es sich bei dem Werkzeug 10 um ein Schneidwerkzeug handeln. Allgemein kann es ein Werkzeug sein, welches zum Einbau in eine Werkzeugmaschine 1 bestimmt ist. Die Aufnahmeeinheit 30 kann dabei vorteilhaft in die Werkzeugmaschine 1 integriert sein, um in gewissen zeitlichen Abständen eine Zustandsüberwachung durchzuführen. Die Aufnahmeeinheit 30 ist mit einer Recheneinheit 40 gekoppelt, um die aufgenommenen Bilddatensätze IM1, IM2 entsprechend den beschriebenen Verfahrensschritten weiterzuverarbeiten. Neben der Recheneinheit 40 umfasst das Analysesystem 20 auch eine Speichereinheit 60, welche beispielsweise wie hier angedeutet in die Recheneinheit 40 integriert sein kann. Zweckmäßig ist sie zumindest mit der Recheneinheit 40 gekoppelt. Ferner umfasst die Recheneinheit 40 in diesem Beispiel mehrere neuronale Netzwerke, nämlich zunächst ein tiefes faltendes Netzwerk 51, welches Teil eines Superpixel-Sampling-Netzwerks 50 ist. Dieses kommt bei den Verfahrensschritten a2) und b2) zum Einsatz. Weiterhin umfasst die Recheneinheit 40 ein siamesisches Netzwerk 41, welches bei der Ähnlichkeitsbewertung im Teilschritt c1) verwendet wird. Wie durch die Punkte angedeutet, kann die Recheneinheit 40 optional noch weitere, hier nicht näher dargestellte Elemente umfassen. Sie ist in diesem Beispiel mit einer Bildausgabeeinheit 70 gekoppelt, mit welcher insbesondere der erhaltene Klassifikationsdatensatz DSC angezeigt werden kann. Optional kann mit dieser Bildausgabeeinheit 70 auch eine Benutzereingabe zur Festlegung oder Überprüfung der Zuordnungen in den Schritten a3) bzw. b3) unterstützt werden. Es kann sich also mit anderen Worten um eine Benutzerschnittstelle handeln, über welche auch eine entsprechende Eingabe von Daten möglich ist.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

### Bezugszeichenliste

- 1: Werkzeugmaschine
- 10: Werkzeug
- 10a: verschleißrelevanter Bereich
- 20: Analysesystem
- 30: Aufnahmeeinheit
- 40: Recheneinheit
- 41: neuronales Netzwerk (siamesisches Netzwerk)
- 50: Superpixel-Sampling-Netzwerk
- 51: tiefes faltendes Netzwerk
- 52: Faltungsebenen
- 53: Faltungsebenen
- 54: Faltungsebenen
- 55: letzte Ebene
- 57: differenzierbarer SLIC-Algorithmus
- 58: Berechnung der Superpixel-Assoziationen
- 59: Berechnung der Superpixel-Zentren
- 60: Speichereinheit
- 70: Bildausgabeeinheit
- 100: Benutzer
- B: Hintergrundbereich
- ClB: Hintergrundklasse
- ClS: Flächendefektklasse
- ClT: Werkzeugklasse
- Cl+: Materialaufbauklasse
- Cl-: Materialabtragungsklasse
- DS1: Referenzdatensatz
- DS2: Arbeitsdatensatz
- DSC: Klassifikationsdatensatz
- IM1: erster Bilddatensatz
- IM2: zweiter Bilddatensatz
- L1: Umrisslinie im Referenzdatensatz
- L2: Umrisslinie im Arbeitsdatensatz
- P1: erste Bildpunkte
- P2: zweite Bildpunkte
- SP1: Referenz-Superpixel
- SP2: Arbeits-Superpixel
- T: Werkzeugbereich
- a: Bereitstellen eines Referenzdatensatzes
- a1: Erzeugung eines ersten Bilddatensatzes
- a2: Segmentierung in Superpixel
- a3: Klassenzuordnung
- a4: Speichern des Referenzdatensatzes
- b: Bereitstellen eines Arbeitsdatensatzes
- b1: Erzeugung eines zweiten Bilddatensatzes
- b2: Segmentierung in Superpixel
- b3: Klassenzuordnung
- b4: Speichern des Arbeitsdatensatzes
- c: Klassifikation von Flächendefekten
- c1: Ähnlichkeitsbewertung
- c2: Klassenzuordnung
- d: Klassifikation von Randdefekten
- d0: Bildtransformation
- d1: Vergleich
- d2: Klassenzuordnung
- d3: Klassenzuordnung
- e: Bereitstellen eines Klassifikationsdatensatzes

## Patentansprüche

1. Verfahren zur Überwachung des Zustands eines Werkzeugs (10) umfassend die folgenden Schritte:
a) Bereitstellen eines Referenzdatensatzes (DS1) durch
a1) Erzeugung eines ersten Bilddatensatzes (IM1) mit einer Vielzahl von Bildpunkten (P1) für das Werkzeug (10) in einem Referenzzustand,
a2) automatisierte Segmentierung des ersten Bilddatensatzes (IM1) in eine Anzahl von Referenz-Superpixeln, (SP1)
a3) Zuordnung der Referenz-Superpixel (SP1) zu wenigstens zwei semantischen Klassen, welche eine Werkzeugklasse (ClT) und eine Hintergrundklasse (ClB) umfassen, so dass ein Werkzeugbereich (T) und ein Hintergrundbereich (B) des Referenzdatensatzes (DS1) definiert werden;
b) Bereitstellen eines Arbeitsdatensatzes (DS2) durch
b1) Erzeugung eines zweiten Bilddatensatzes (IM2) mit einer Vielzahl von Bildpunkten (P2) für das Werkzeug (10) in einem Arbeitszustand,
b2) automatisierte Segmentierung des zweiten Bilddatensatzes (IM2) in eine Anzahl von Arbeits-Superpixeln (SP2)
b3) Zuordnung der Arbeits-Superpixel (SP2) zu den wenigstens zwei semantischen Klassen, so dass ein Werkzeugbereich (T) und ein Hintergrundbereich (B) des Arbeitsdatensatzes (DS2) definiert werden;
c) automatisierte Klassifikation von Flächendefekten durch
c1) Bewertung der Ähnlichkeit der Arbeits-Superpixel (SP2) im Werkzeugbereich (T) des Arbeitsdatensatzes (DS2) mit den Referenz-Superpixeln (SP1) im Werkzeugbereich (T) des Referenzdatensatzes (DS1) und
c2) Zuordnung der Arbeits-Superpixel (SP2), deren Ähnlichkeitswerte unter einem vorgegebenen Schwellwert liegen, zu einer Flächendefektklasse (ClS).

2. Verfahren nach Anspruch 1 mit dem zusätzlichen Schritt:
d) automatisierte Klassifikation von Randdefekten durch
d0) Anwendung einer Bildtransformation auf den Referenzdatensatz (DS1) und/oder den Arbeitsdatensatz (DS2), um eine Übereinstimmung der Ausrichtung der jeweiligen Werkzeugbereiche (T) zu erreichen, zumindest falls ein Versatz zwischen den Werkzeugbereichen (T) vorliegt, welcher einen vorgegebenen Schwellwert überschreitet.
d1) Vergleich der Werkzeugbereiche (T) des Referenzdatensatzes (DS1) und des Arbeitsdatensatzes (DS2),
d2) Zuordnung der Bildpunkte (P2) des Arbeitsdatensatzes (DS2), welche im Werkzeugbereich (T) des Arbeitsdatensatzes (DS2) und nicht im Werkzeugbereich (T) des Referenzdatensatzes (DS1) liegen, zu einer Materialaufbauklasse (Cl+) und
d3) Zuordnung der Bildpunkte (P2) des Arbeitsdatensatzes (DS2), welche im Werkzeugbereich (T) des Referenzdatensatzes (DS1) und nicht im Werkzeugbereich (T) des Arbeitsdatensatzes (DS2) liegen, zu einer Materialabtragungsklasse (Cl-).

3. Verfahren nach einem der vorhergehenden Ansprüche mit dem zusätzlichen Schritt:
e) Bereitstellung eines übergeordneten Klassifikationsdatensatzes (DSC), im welchem die einzelnen Bildpunkte (P2) des zweiten Bilddatensatzes (IM2) entsprechend den Schritten b3), c2), d2) und d3) jeweils einer von wenigstens fünf semantischen Klassen zugeordnet sind, welche die Hintergrundklasse (ClB), die Werkzeugklasse (ClT), die Flächendefektklasse (ClD), eine Materialaufbauklasse (Cl+) und eine Materialabtragungsklasse (Cl-) umfassen.

4. Verfahren nach einem der vorhergehenden Ansprüche, bei welchem die Schritte a2), b2) und/oder c1) jeweils unter Verwendung wenigstens eines künstlichen neuronalen Netzwerks (41) erfolgen, insbesondere unter Verwendung eines faltenden neuronalen Netzwerks.

5. Verfahren nach Anspruch 4, bei welchem die Schritte a), b) und c) mehrfach hintereinander für unterschiedliche Typen von Werkzeugen (10) durchgeführt werden, wobei insbesondere das wenigstens eine künstliche neuronale Netzwerk (41) unverändert bleibt.

6. Verfahren nach einem der vorhergehenden Ansprüche, bei welchem die Segmentierung in Superpixel (SP1,SP2) in den Schritten a2) und/oder b2) unter Verwendung eines Superpixel-Sampling-Netzwerks (42) erfolgt.

7. Verfahren nach Anspruch 6, bei welchem das Superpixel-Sampling-Netzwerk auf der Kombination eines differenzierbaren SLIC-Algorithmus und eines faltenden neuronalen Netzwerks basiert.

8. Verfahren nach einem der vorhergehenden Ansprüche, bei welchem die Zuordnung der Superpixel (SP1,SP2) zu den semantischen Klassen in den Schritten a3) und/oder b3) automatisiert oder semi-automatisiert, insbesondere unter Verwendung eines k-Means-basierten Algorithmus erfolgt.

9. Verfahren nach Anspruch 8, bei welchem die Zuordnung der Superpixel (SP1,SP2) zu den semantischen Klassen in den Schritten a3) und/oder b3) einen Teilschritt einer computergestützten Überprüfung der Zuordnung durch einen Benutzer und/oder einer computergestützten Festlegung einer Zuordnung durch einen Benutzer (100) aufweist.

10. Verfahren nach einem der vorhergehenden Ansprüche, bei welchem die Bewertung der Ähnlichkeit in Schritt c1) mit einem künstlichen neuronalen Netzwerk (41) auf Basis der Deep Metric Learning Methode erfolgt.

11. Verfahren nach Anspruch 10, bei welchem die Anwendung der Deep Metric Learning Methode unter Verwendung eines siamesischen Netzwerks (42) oder eines Triplet-Netzwerks erfolgt.

12. Verfahren nach einem der vorhergehenden Ansprüche, bei welchem die Bewertung der Ähnlichkeit der Arbeits-Superpixel (SP2) in Schritt c1) die Bewertung der Ähnlichkeit des jeweiligen Arbeits-Superpixels (SP2) mit allen Referenz-Superpixeln (SP1) im Werkzeugbereich (T) des Referenzdatensatzes (DS1) umfasst, und dass diese Bewertung für alle Arbeits-Superpixel (SP2) im Werkzeugbereich (T) des Arbeitsdatensatzes (DS2) wiederholt wird.

13. Verfahren nach einem der vorhergehenden Ansprüche, bei welchem das Werkzeug (10) ein Bearbeitungswerkzeug für eine Werkzeugmaschine (1) ist.

14. Analysesystem (20) zur Überwachung des Zustands eines Werkzeugs (10), welches eine Aufnahmeeinheit (30), eine Recheneinheit (40) und eine Speichereinheit (60) aufweist, wobei das Analysesystem (20) insgesamt dazu eingerichtet ist, das Verfahren nach einem der vorhergehenden Ansprüche durchzuführen.

15. Computerprogrammprodukt umfassend Befehle, wobei die Befehle bei der Ausführung des Computerprogrammprodukts auf einem Computer diesen dazu veranlassen, das Verfahren gemäß einem der Ansprüche 1 bis 13 auszuführen.
